# EUROPEAN PATENT APPLICATION

(11) **EP 2 891 828 A2**
(43) Date of publication of application: **08.07.2015**
(21) Application number: 14179754.8
(22) Date of filing: 04.08.2014
(51) Int. Cl.: F16H 25/22

(54) **Ball screw device**

(30) Priority: 05.08.2013 JP 2013162673; 28.10.2013 JP 2013223538
(71) Applicant: JTEKT CORPORATION, Osaka-shi Osaka 542-8502 (JP)
(72) Inventor: Sakaguchi, Naoko, Osaka-shi, Osaka, 542-8502 (JP); Koyagi, Katsura, Osaka-shi, Osaka, 542-8502 (JP)
(74) Representative: Winter, Brandl, Fürniss, Hübner, Röss, Kaiser, Polte - Partnerschaft mbB

(57) **Abstract**

A ball screw device includes a screw shaft; a ball nut; a first deflector fitted to an end portion of the ball nut; a ball guide portion that guides balls positioned in a helical inner ball passage formed by the ball nut and the screw shaft, to a first end portion ball passage in the first deflector; the balls that are set to form a row extending in the inner ball passage and the first end portion ball passage; and a first elastic member having a base end that is positioned in the first end portion ball passage and a distal end that is disposed and accommodated in the first end portion ball passage so as to be able to contact the ball positioned at one end of the row of the balls.

## Description

### BACKGROUND OF THE INVENTION

### 1. Field of the Invention

The present invention relates to a ball screw device.

### 2. Description of Related Art

In a ball screw device in Japanese Patent Application Publication No. 2010-71411 (JP 2010-71411 A), a circulation path is provided. The circulation path is provided to circulate balls along a raceway by connecting one end portion and the other end portion of a ball rolling path. The circulation path includes a through-hole, a supply-side communication path, and a non-supply-side communication path. The through-hole is formed to extend through a circumferential wall of a ball screw nut in the axial direction. The supply-side communication path connects one end of the through-hole and one end portion of the ball rolling path. The non-supply-side communication path connects the other end of the through-hole and the other end portion of the ball rolling path. The supply-side communication path is formed in a supply-side deflector member fitted to the circumferential wall of the ball nut. The non-supply-side communication path is formed in a non-supply-side deflector member fitted to the circumferential wall of the ball nut.

The through-hole in JP 2010-71411 A is formed, for example, by drilling. In order to perform drilling easily, the through-hole needs to extend along the axial direction of the ball nut (ball screw nut). However, when the through-hole is limited to a through-hole extending along the axial direction, the arrangement positions of a pair of deflectors (supply-side deflector member and non-supply-side deflector member) in the circumferential direction are limited. Therefore, in the ball screw device that has the above-described configuration, the number of turns that can be employed is limited, and thus the number of turns is limited to numbers having a predetermined common value (for example, 7) after a decimal point, such as 1.7 turns and 2.7 turns. Specifically, for example, even when the effective number of turns of a ball screw device, which is theoretically required, is, for example, 2.3 in theory, a ball screw device in which the effective number of turns is 2.7 needs to be employed. Accordingly, the size of the ball screw device in the axial direction may be increased.

Therefore, the inventor has considered providing a non-circulation type ball screw device in which balls are not circulated. Even in the non-circulation type ball screw device, it is preferable to transmit power between a screw shaft and a ball nut with high efficiency.

### SUMMARY OF THE INVENTION

An object of the present invention is to provide a ball screw device in which the theoretical effective number of turns can be employed without change so that the size of the ball screw device can be reduced in an axial direction. Another object of the present invention is to provide a non-circulation type ball screw device in which power can be transmitted between a screw shaft and a ball nut with high efficiency.

According to an aspect of the present invention, there is provided a ball screw device including a screw shaft having an outer peripheral surface on which a screw groove is formed; a ball nut that is externally fitted to the screw shaft, the ball nut having an inner peripheral surface on which a screw groove is formed; an end portion constituent member that is fitted to at least one of end portions of the ball nut in an axial direction and has an annular first ball passage in which a plurality of balls is able to move; a ball guide portion that guides the balls positioned in a helical second ball passage formed by the screw grooves of the ball nut and the screw shaft or the balls discharged from the second ball passage, to the first ball passage; the balls that are set to form a row extending in the first and second ball passages; and an elastic member that is configured to be elastically deformable, the elastic member having one end that is positioned in the first ball passage and the other end that is disposed and accommodated in the first ball passage so as to be able to contact the ball positioned at an end of the row of the balls.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic sectional view of an electric actuator to which a ball screw device according to a first embodiment of the present invention is applied;
FIG. 2 is a schematic side view of the ball screw device according to the first embodiment of the present invention;
FIG. 3 is a perspective view of the ball screw device according to the first embodiment of the present invention;
FIG. 4 is an exploded perspective view of the ball screw device according to the first embodiment of the present invention;
FIG. 5 is a sectional view of the ball screw device according to the first embodiment of the present invention taken along an axial direction;
FIG. 6 is a perspective view of a first deflector according to the first embodiment of the present invention;
FIGS. 7A, 7B, and 7C are views illustrating the configuration of the first deflector including a ball guide portion illustrated in FIG. 6;
FIG. 8 is a perspective view of a first fitting member illustrated in FIG. 4;
FIG. 9A is a view of an inner peripheral surface of one end portion of the ball nut when viewed from an inside in a radial direction;
FIG. 9B is a view when viewed in a direction of an arrow C in FIG. 9A;
FIG. 10 is a perspective view illustrating a state where the first deflector is fitted to the one end portion of the ball nut by using the first fitting member;
FIG. 11 is a view illustrating a state of the balls in the vicinity of a guide passage when viewed from the inside in the radial direction of the ball nut;
FIG. 12 is a view illustrating a state of the balls in the vicinity of the guide passage when viewed in the axial direction of the ball nut;
FIG. 13 is a sectional view taken along a line E-E in FIG. 5;
FIG. 14 is a sectional view taken along a line F-F in FIG. 5;
FIGS. 15A and 15B are views illustrating behavior of balls in a first end portion ball passage when an axial load directed to one side in the axial direction is input to the ball screw device;
FIGS. 16A and 16B are views illustrating the behavior of the balls in a second end portion ball passage when an axial load directed to the other side in the axial direction is input to the ball screw device;
FIG. 17 is a schematic sectional view of an electric actuator to which a ball screw device according to a second embodiment of the present invention is applied;
FIG. 18 is a schematic side view of the ball screw device according to the second embodiment of the present invention;
FIG. 19 is a perspective view of the ball screw device according to the second embodiment of the present invention;
FIG. 20 is an exploded perspective view of the ball screw device according to the second embodiment of the present invention;
FIG. 21 is a sectional view of the ball screw device according to the second embodiment of the present invention taken along an axial direction;
FIG. 22 is a perspective view of an end portion constituent member illustrated in FIG. 20;
FIG. 23 is a perspective view of an inside constituent member of the end portion constituent member illustrated in FIG. 20;
FIG. 24 is a perspective view of a contact member illustrated in FIG. 20;
FIG. 25 is a sectional view illustrating a state of balls in the vicinity of one end face of the ball nut when viewed in the axial direction of the ball nut;
FIG. 26 is a perspective view illustrating a state where the balls are discharged from the one end face of the ball nut;
FIG. 27 is a sectional view taken along a line G-G in FIG. 21; and
FIGS. 28A and 28B are views illustrating behavior of the balls in an end portion ball passage when an axial load directed to one side in the axial direction is input to the ball screw device.

### DETAILED DESCRIPTION OF EMBODIMENTS

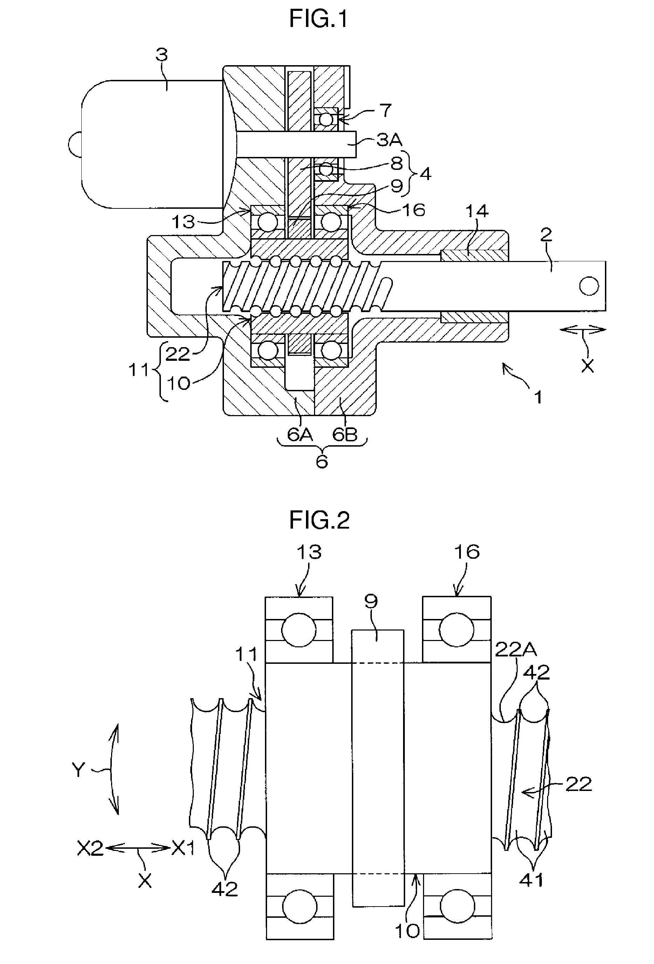

Hereinafter, embodiments of the present invention will be described with reference to the accompanying drawings. FIG. 1 is a schematic sectional view of an electric actuator 1 to which a ball screw device 11 according to a first embodiment of the present invention is applied. The electric actuator 1 drives a driven object by causing a drive shaft 2 to advance and retreat in the axial direction X. The electric actuator 1 includes an electric motor 3, the drive shaft 2, a speed reducing mechanism 4, the ball screw device 11, and a housing 6. The speed reducing mechanism 4 transmits a running torque of the electric motor 3. The ball screw device 11 converts the running torque of the electric motor 3 transmitted via the speed reducing mechanism 4 to linear motion of the drive shaft 2 in the axial direction X. The housing 6 accommodates the drive shaft 2, the speed reducing mechanism 4, and the ball screw device 11.

The housing 6 includes a first housing 6A and a second housing 6B that contacts the end face of the first housing 6A. The housings 6A, 6B are joined to each other by fixing bolts (not illustrated). The electric motor 3 is fitted to the first housing 6A. An output shaft 3A of the electric motor 3 is inserted into the first housing 6A, and is rotatably supported by a rolling bearing 7 that is fitted to the second housing 6B.

The drive shaft 2 is formed to be integrated with a screw shaft 22 of the ball screw device 11. The drive shaft 2 is rotatably supported through a plain bearing 14 in the second housing 6B. The speed reducing mechanism 4 includes a first gear 8 and a second gear 9. The first gear 8 is accommodated and disposed between the first and second housings 6A, 6B. The first gear 8 is fitted to the end portion of the output shaft 3A of the electric motor 3 so as not to rotate relative to the end portion of the output shaft 3A. The second gear 9 is externally fitted to the outer periphery of a ball nut 10, and is engaged with the first gear 8.

FIG. 2 is a schematic side view of the ball screw device 11. As illustrated in FIGS. 1 and 2, the ball nut 10 is rotatably supported by a rolling bearing 13 and a rolling bearing 16. The rolling bearing 13 is fitted to the inner periphery of the first housing 6A. The rolling bearing 16 is fitted to the inner periphery of the second housing 6B. The second gear 9, the rolling bearing 13, and the rolling bearing 16 are fitted and fixed to the outer periphery of the ball nut 10.

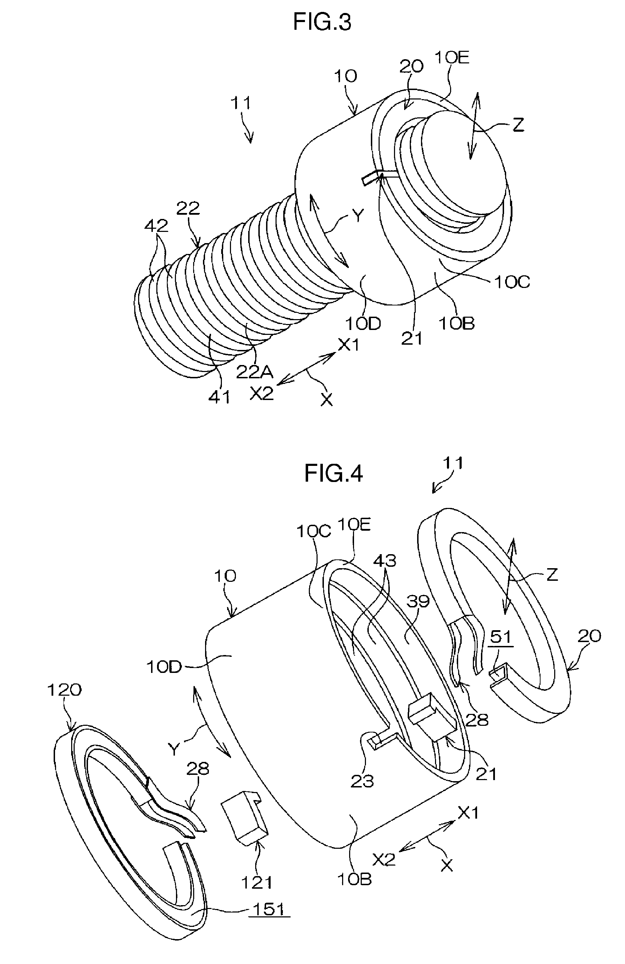

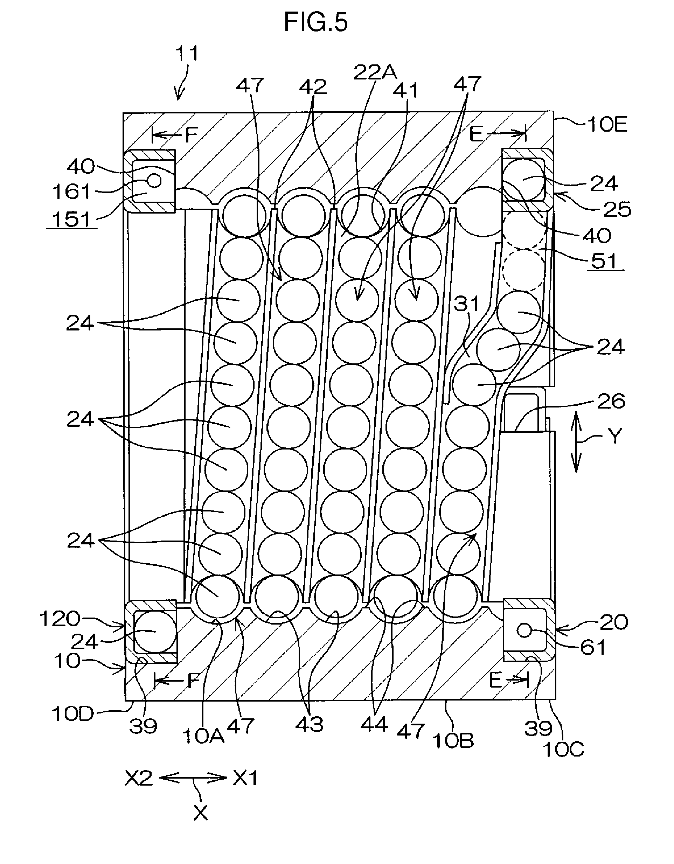

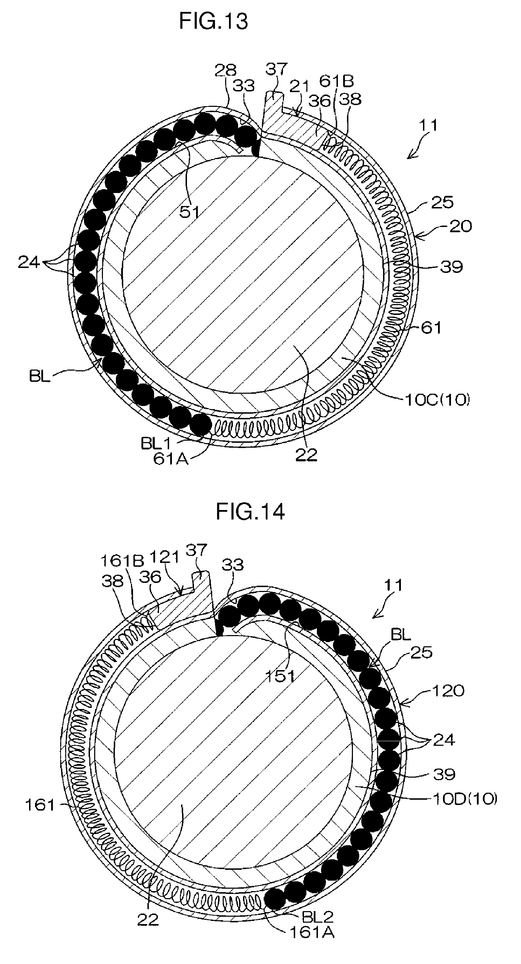

FIG. 3 is a perspective view of the ball screw device 11. FIG. 4 is an exploded perspective view of the ball screw device 11, in which the illustration of a part of the screw shaft 22 is omitted. FIG. 5 is a sectional view of the ball screw device 11 taken along the axial direction X. In FIG. 5, the illustration of the configuration outside the ball nut 10 is omitted. As illustrated in FIGS. 3 to 5, the ball screw device 11 includes the screw shaft 22, the ball nut 10, a first deflector (first end portion constituent member) 20, a second deflector (second end portion constituent member (not illustrated in FIG. 4)) 120, a plurality of balls 24 (see FIG. 5), a first fitting member (restriction member) 21, and a second fitting member (restriction member) 121 (see FIG. 4). The screw shaft 22 extends along an axial direction X. The ball nut 10 is externally fitted to the screw shaft 22. The first deflector 20 is fitted to one end portion (end portion in an axial direction X1) 10C of the ball nut 10 in the axial direction X. The second deflector 120 is fitted to the other end portion (end portion in an axial direction X2) 10D of the ball nut 10 in the axial direction X. The balls 24 form a ball row BL (see FIG. 14) that is set in the inside of the first deflector 20, the inside of the ball nut 10, and the inside of the second deflector 120. The first fitting member 21 is used for fitting the first deflector 20 to the one end portion 10C of the ball nut 10. The second fitting member 121 is used for fitting the second deflector 120 to the other end portion 10D of the ball nut 10. The ball screw device 11 is a non-circulation type ball screw device in which the balls 24 are not circulated. The number of turns of the ball screw device 11 is, for example, 4.5. In the ball screw device 11, the effective number of turns, which is theoretically required, is also 4.5, and the theoretical effective number of turns is employed without change, as the actual number of turns.

Hereinafter, one axial direction (the rightward direction in FIGS. 2 and 5 and the direction toward the right front side in FIGS. 3 and 4) is referred to as the axial direction X1, and the other axial direction (the leftward direction in FIGS. 2 and 5 and the direction toward the left rear side in FIGS. 3 and 4) is referred to as the axial direction X2 in the description. The axial direction X1 and the axial direction X2 are collectively referred to as the axial direction X. As illustrated in FIGS. 2, 3, and 5, screw grooves 41 are formed on an outer peripheral surface 22A of the screw shaft 22. The screw grooves 41 are helical grooves that are disposed at different positions in the axial direction X1 while extending in circles around the circle center of the screw shaft 22. The section of the screw groove 41 is a curved surface having a substantially U-shape. Helical screw threads 42, each of which forms the boundary between the adjacent screw grooves 41 in the axial direction X, are formed on the outer peripheral surface 22A.

Next, the ball nut 10 will be described with reference to FIGS. 2 to 5 in detail. The ball nut 10 is a tubular body that extends along the axial direction X, and the ball nut 10 is formed using a metal such as steel. An inner peripheral surface 10A and an outer peripheral surface 10B of the ball nut 10 are cylindrical surfaces that have the center axis extending along the axial direction X. Screw grooves 43 are formed on the inner peripheral surface 10A of the ball nut 10. The screw grooves 43 are helical grooves that are disposed at different positions in the axial direction X1 while extending in circles around the circle center of the inner peripheral surface 10A. The section of the screw groove 43 is a curved surface having a substantially U-shape. Helical screw threads 44 (see FIG. 5), each of which forms the boundary between the adjacent screw grooves 43 in the axial direction X, are formed on the inner peripheral surface 10A. The screw grooves 43 are formed on the inner peripheral surface 10A excluding the one end portion 10C and the other end portion 10D of the ball nut 10. Since the first and second deflectors 20, 120 are respectively fitted to the one end portion 10C and the other end portion 10D of the ball nut 10 as illustrated in FIG. 5, the screw grooves 43 are not formed on the inner peripheral surface 10A at the one end portion 10C and the other end portion 10D of the ball nut 10.

As illustrated in FIG. 5, in a region of the ball nut 10 where the inner peripheral surface 10A is present in the axial direction X, helical inner ball passages (second ball passage) 47, in which the balls 24 are able to roll, are defined by the screw grooves 43 of the ball nut 10 and the screw grooves 41 on a part of the outer peripheral surface 22A of the screw shaft 22, the part facing the inner peripheral surface 10A. As illustrated in FIG. 5, each of the inner ball passages 47 has a substantially circular section. The inner ball passages 47 are disposed at different positions in the axial direction X1 while extending in circles around the circle center of the inner peripheral surface 10A of the ball nut 10 and the outer peripheral surface 22A of the screw shaft 22, and thus, the inner ball passages 47 have a helical shape. Between the adjacent inner ball passages 47 in the axial direction X, the screw thread 42 of the screw shaft 22 and the screw thread 44 of the ball nut 10 are arranged to face each other in the radial direction. The screw threads 42, 44 form the boundary between the adjacent two rows of inner ball passages 47 in the axial direction X.

As illustrated in FIGS. 3 to 5, in the one end portion 10C of the ball nut 10, the first deflector 20 is interposed between the inner peripheral surface 10A of the ball nut 10 and the outer peripheral surface 22A of the screw shaft 22. In the other end portion 10D of the ball nut 10 in the axial direction X, the second deflector 120 is interposed between the inner peripheral surface 10A of the ball nut 10 and the outer peripheral surface 22A of the screw shaft 22. In an end face 10E of the ball nut 10 in the axial direction X1, an engagement cut portion 23 (see FIG. 4), which has a rectangular shape when viewed from the outside in the radial direction Z, is formed at a point in a circumferential direction Y. Although not illustrated, the same cut portion is also formed in an end face (not illustrated) of the ball nut 10 in the axial direction X2.

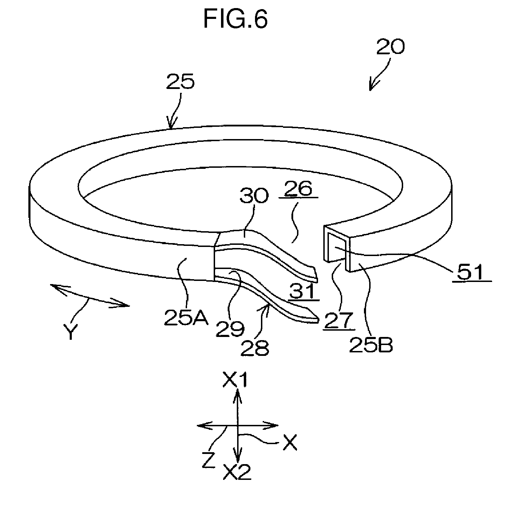

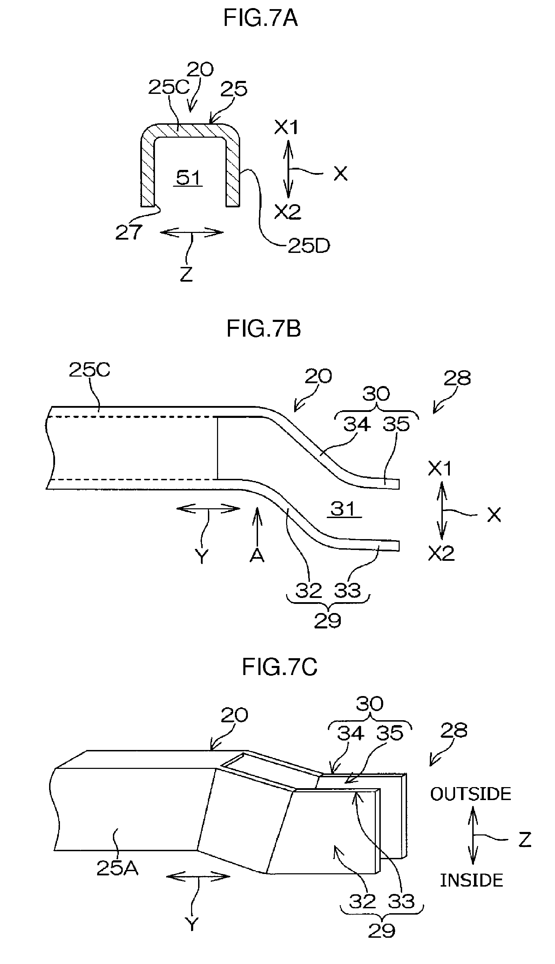

FIG. 6 is a perspective view of the first deflector 20 according to the first embodiment of the present invention. FIG. 7A is a sectional view of a rail portion 25 taken along the radial direction Z. The first deflector 20 includes the rail portion 25 that is tubular and extends in a C-shape. The rail portion 25 is provided so that a cut portion 26 is formed in a part of the annular rail portion 25 in the circumferential direction. The rail portion 25 is a press-formed product that is formed by using a metal material such as steel. The sectional shape (the shape of the section taken along a plane extending along the radial direction Z) of the rail portion 25 is an angular U-shape (substantially rectangular shape). That is, an opening 27 is formed over the entire range in the circumferential direction, in one side (in the axial direction X2-side illustrated in FIG. 7A) of the rail portion 25. As illustrated in FIG. 4, the first deflector 20 is fitted into the one end portion 10C of the ball nut 10 in a state where the opening 27 of the rail portion 25 is directed toward the ball nut 10.

A C-shaped (substantially annular) first end portion ball passage (first ball passage, non-loaded zone) 51, in which the balls 24 are able to roll, is formed and defined in the rail portion 25 of the first deflector 20 (see both FIGS. 5 and 7A). When a clockwise end portion of the rail portion 25 when viewed in the axial direction X1 is referred to as a distal end portion 25A of the rail portion 25 and a counterclockwise end portion thereof is referred to as a base end 25B of the rail portion 25, a ball guide portion 28 is provided in the distal end portion 25A of the rail portion 25.

FIG. 7B is a view of the first deflector 20 including the ball guide portion 28 when viewed from the outside in the radial direction Z. FIG. 7C is a perspective view when viewed in a direction of an arrow A in FIG. 7B. Hereinafter, the configuration of the ball guide portion 28 will be described with reference to FIGS. 7B and 7C. For the convenience of description, the direction and the like of each portion will be described on the basis of a state in which the first deflector 20 is fitted to the one end portion 10C of the ball nut 10.

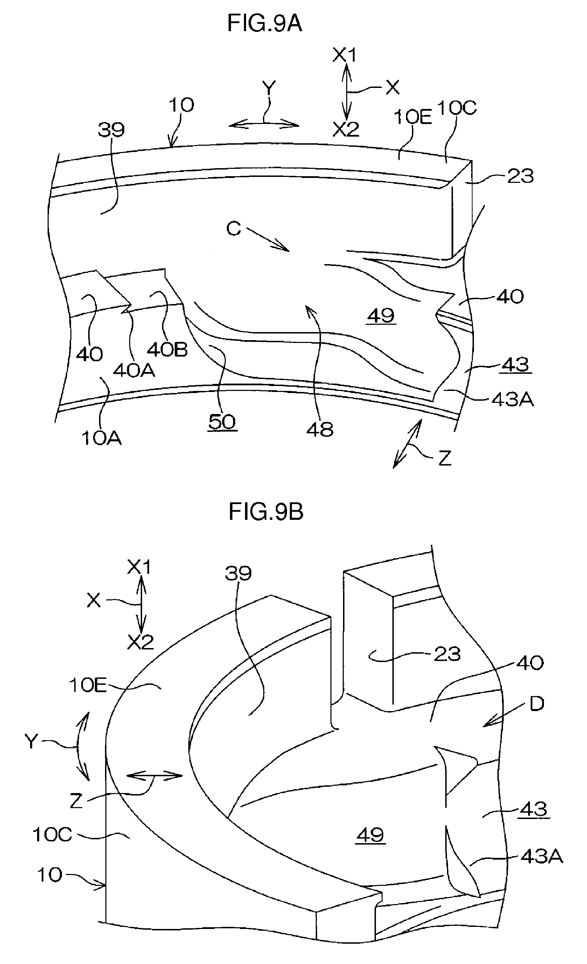

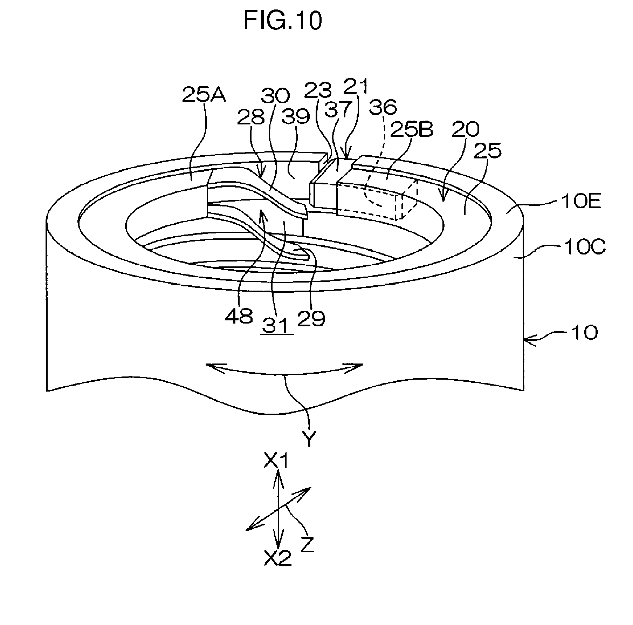

The ball guide portion 28 includes first and second ball guide pieces 29, 30 that are arranged in parallel with the axial direction X. A guide passage 31 (see also FIG. 10) for guiding the balls 24 is formed and defined by the first and second ball guide pieces 29, 30. The guide passage 31 is set to have a size that enables the ball 24 to roll. In the state where the first deflector 20 is fitted, the distal end (right end of FIG. 7B) of the guide passage 31 faces one end portion 43A (see FIGS. 9A and 9B) of the screw groove 43. Regarding FIG. 7C, for the convenience of illustration, the circumferential direction Y is illustrated as a straight line. However, it is obvious that the circumferential direction Y actually has an arc shape.

The first ball guide piece (ball guide piece) 29 is integrally formed, by bending a connection plate 25D of the rail portion 25. The first ball guide piece 29 is fitted to the distal end portion 25A of the rail portion 25 to cover the opening 27. The first ball guide piece 29 includes a first curved portion (curved portion) 32 and a first arc-shaped plate portion 33 having an arc shape. The first curved portion 32 is curved to greatly protrude in the axial direction X2 and toward the inside in the radial direction Z, in a direction from the distal end portion 25A of the rail portion 25 toward one side (the right side illustrated in FIGS. 7A, 7B, and 7C) in the circumferential direction Y. The first arc-shaped plate portion 33 is continuous with the distal end of the first curved portion 32, and the center thereof is the circle center of the inner peripheral surface 10A of the ball nut 10. With regard to both the axial direction X and the radial direction Z, the gradient of the first curved portion 32 is changed from a low gradient to a high gradient, and returns to the low gradient, in the direction from the distal end portion 25A of the rail portion 25 to one side (the right side illustrated in FIGS. 7A, 7B, and 7C) in the circumferential direction Y.

The second ball guide piece (ball guide piece) 30 is formed to be integrated with a connection plate 25C of the rail portion 25. The second ball guide piece 30 includes a second curved portion (curved portion) 34 and a second arc-shaped plate portion 35 having an arc shape. The second curved portion 34 is curved to greatly protrude in the axial direction X2 and toward the inside in the radial direction Z, in the direction from the distal end portion 25A of the rail portion 25 to one side (the right side illustrated in FIGS. 7A, 7B, and 7C) in the circumferential direction Y. The second arc-shaped plate portion 35 is continuous with the distal end of the second curved portion 34, and the center thereof is the circle center of the inner peripheral surface 10A of the ball nut 10. The first and second curved portions 32, 34 have the same specifications. The first and second arc-shaped plate portions 33, 35 have the same specifications. Therefore, the guide passage 31 is also curved in accordance with the curve of the curved portions 32, 34 of the first and second ball guide pieces 29, 30.

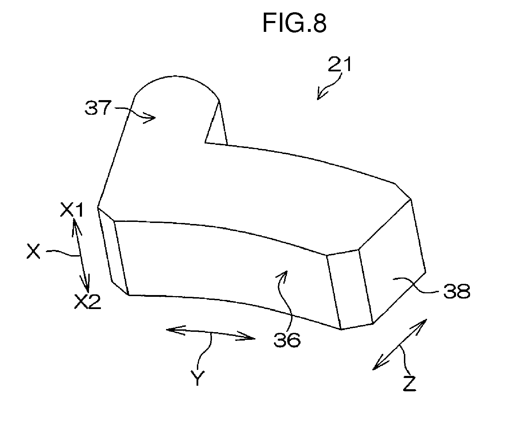

FIG. 8 is a perspective view of the first fitting member 21. The first fitting member 21 is a substantially L-shaped member that is engaged with the one end portion 10C (see FIG. 4 and the like) of the ball nut 10 (see FIG. 4 and the like) to fit the first deflector 20 to the one end portion 10C. The first fitting member 21 is formed by using a resin material or a metal material. The first fitting member 21 includes a fixing portion 36 and an engaging portion 37. The fixing portion 36 is fixed to the first deflector 20. The engaging portion 37 is engaged with the one end portion 10C of the ball nut 10. In the first fitting member 21, the fixing portion 36 and the engaging portion 37 are integrally provided. The fixing portion 36 has an arc shape extending along the inner peripheral surface 10A of the ball nut 10, and the shape of the section taken along a plane perpendicular to the circumferential direction Y is a rectangular shape. The size of the section of the fixing portion 36 is set so that the fixing portion 36 is exactly fitted into the base end 25B of the rail portion 25 of the first deflector 20. Accordingly, as illustrated in FIG. 10, the first fitting member 21 is fixed to the first deflector 20 by inserting the fixing portion 36 into the base end 25B of the rail portion 25.

The engaging portion 37 is formed to protrude toward the outside in the radial direction Z from the end portion (left end portion illustrated in FIG. 8) of the fixing portion 36 in the circumferential direction Y. The engaging portion 37 has the same thickness as that of the fixing portion 36 in the axial direction X. In addition, the thickness of the engaging portion 37 in the circumferential direction Y is set to be equal to the width of the engagement cut portion 23 of the ball nut 10 in the circumferential direction Y. In the fixing portion 36, in the end face on the opposite side (on the right side illustrated in FIG. 8) to the side on which the engaging portion 37 is provided, a locking surface (restriction member) 38 for locking a base end (one end) 61B (see FIG. 13) of a first elastic member 61, which will be described later, is formed. The locking surface 38 is constituted by a flat surface perpendicular to the circumferential direction Y.

FIG. 9A is a view of the inner peripheral surface 10A of the one end portion 10C of the ball nut 10 when viewed from an inside in the radial direction Z. FIG. 9B is a view when viewed in a direction of an arrow C in FIG. 9A. FIG. 9A is a view when viewed in a direction of an arrow D in FIG. 9B. FIG. 10 is a perspective view illustrating a state where the first deflector 20 is fitted to the one end portion 10C of the ball nut 10 by using the first fitting member 21. As illustrated in FIGS. 5, 9A, and 9B, an annular stepped portion 40 that is continuous with one end face 10E of the ball nut 10 is formed on the inner peripheral surface 10A at the one end portion 10C of the ball nut 10. In the inner peripheral surface 10A, a large diameter surface 39 that is constituted by a large diameter cylindrical surface having the circle center of the inner peripheral surface 10A as the center is formed between the annular stepped portion 40 and the one end face 10E. The first deflector 20 is accommodated in the large diameter surface 39.

As illustrated in FIGS. 9A and 9B, in the inner peripheral surface 10A at the one end portion 10C, an accommodation groove 48 that forms a space for accommodating the ball guide portion 28 of the first deflector 20 is formed at a predetermined position in the circumferential direction Y in a region that is adjacent to the large diameter surface 39 and is located on the axial direction X2-side of the large diameter surface 39 so that the accommodation groove 48 cuts the screw groove 43 toward the outside in the radial direction, and extends to the large diameter surface 39. Since the accommodation groove 48 is formed so as to cut the screw groove 43, the part of the screw groove 43, which is adjacent to the accommodation groove 48, is one end portion (end portion on the axial direction X1-side) 43A of the screw groove 43.

The accommodation groove 48 includes a first groove curved surface 49 and a second groove curved surface 50. The first groove curved surface 49 is curved in the axial direction X and the radial direction Z. The second groove curved surface 50 is curved in the axial direction X. The first groove curved surface 49 is a portion with which the second curved portion 34 (see FIGS. 7B and 7C) of the second ball guide piece 30 comes into close contact when the first deflector 20 is fitted. The first groove curved surface 49 is continuous with the large diameter surface 39, and is curved to greatly protrude in the axial direction X2 and toward the inside in the radial direction Z, in a direction toward one end portion 43A of the screw groove 43 along the circumferential direction Y, as well as the second curved portion 34. The curve of the first groove curved surface 49 is set so that the gradient of the first groove curved surface 49 is changed from a low gradient to a high gradient, and returns to the low gradient, in the direction toward the one end portion 43A of the screw groove 43.

The second groove curved surface 50 is a curved surface that is continuous with (the lowermost portion of) the screw groove 43, and is directed toward the axial direction X1-side, in a direction away from the one end portion 43A of the screw groove 43 along the circumferential direction Y. The second groove curved surface 50 has a substantially arc surface shape in which the gradient thereof becomes steeper, in the direction away from the one end portion 43A of the screw groove 43. The second groove curved surface 50 forms a space for accommodating the first ball guide piece 29.

The fitting of the first deflector 20 will be described with reference to FIG. 10. After fitting (fixing) the first fitting member 21, the first deflector 20 is fitted into the inner peripheral surface 10A at the one end portion 10C of the ball nut 10. At this time, an operator fits the C-shaped first deflector 20 into the one end portion 10C while shrinking (elastically deforming) the first deflector 20 toward the inside in the radial direction Z. After fitting the first deflector 20 into the one end portion 10C, the shape of the first deflector 20 is restored, and by pressing the inner peripheral surface 10A at the one end portion 10C against the outside in the radial direction Z, the first deflector 20 is held in the inner peripheral surface 10A of the ball nut 10. By fitting the engaging portion 37 into the engagement cut portion 23, the first deflector 20 can be prevented from being separated from the one end portion 10C of the ball nut 10.

In the state where the first deflector 20 is fitted to the one end portion 10C of the ball nut 10, the rail portion 25 of the first deflector 20 is disposed and accommodated in a space between the large diameter surface 39 and the outer peripheral surface 22A of the screw shaft 22. The ball guide portion 28 of the first deflector 20 is accommodated in a space defined by the accommodation groove 48. In the state where the first deflector 20 is fitted to the one end portion 10C of the ball nut 10, the first end portion ball passage 51 (see FIG. 5) communicates with the inner ball passages 47 (second ball passage, see FIG. 5) via the guide passage 31.

As illustrated in FIG. 9A, a stepped portion 40A that is continuous with the second groove curved surface 50 is formed in the annular stepped portion 40. An end face 40B that is further recessed from the annular stepped portion 40 toward the axial direction X2-side is formed between the stepped portion 40A and the second groove curved surface 50. In the state where the first deflector 20 is fitted, a base portion (left parts of FIG. 7B and 7C) of the first ball guide piece 29 is accommodated in a space defined by the stepped portion 40A and the end face 40B.

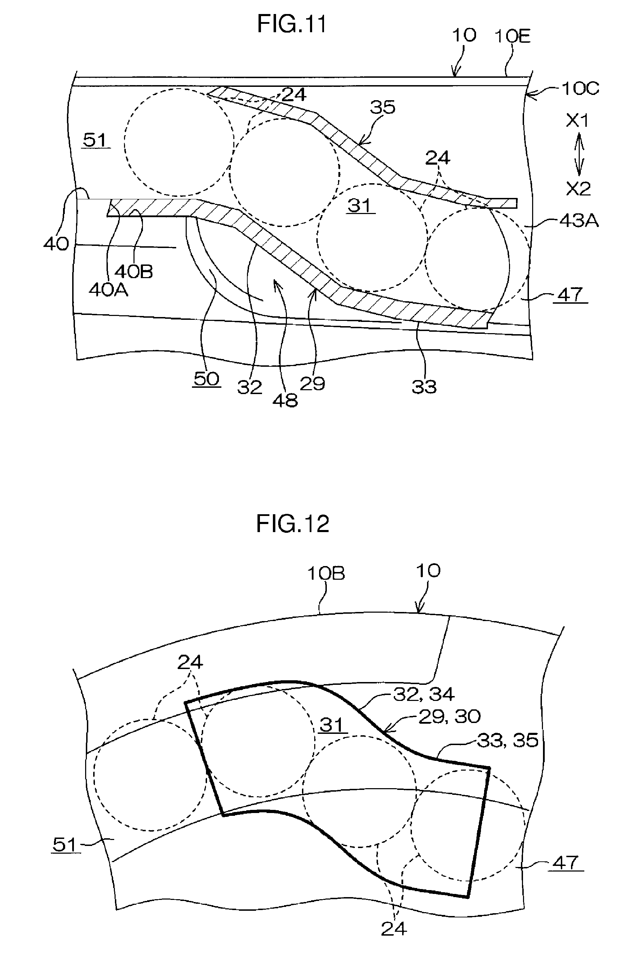

FIG. 11 is a view illustrating a state of the balls 24 in the vicinity of the guide passage 31 when viewed from the inside in the radial direction Z of the ball nut 10. FIG. 12 is a view illustrating a state of the balls 24 in the vicinity of the guide passage 31 when viewed in the axial direction X2 of the ball nut 10. The balls 24 that are positioned in the inner ball passages 47 can be guided to the first end portion ball passage 51 in the first deflector 20 while being guided toward the axial direction X1-side and the outside in the radial direction Z by the guide passage 31. The balls 24 that are positioned in the first end portion ball passage 51 can be guided to the inner ball passages 47 while being guided toward the axial direction X2-side and the inside in the radial direction Z by the guide passage 31.

Returning to FIGS. 4 and 5, the second deflector 120 has the same specifications as those of the first deflector 20. Therefore, the detailed description of the second deflector 120 will be omitted. A C-shaped (substantially annular) second end portion ball passage 151 (first ball passage, non-loaded zone, see FIG. 5), in which the balls 24 are able to roll, is formed and defined in the rail portion 25, by the rail portion 25 of the second deflector 120.

The configuration for fitting the second deflector 120 is provided in the other end portion 10D of the ball nut 10, as well as in the one end portion 10C of the ball nut 10. In FIG. 5 and FIG. 14 that will be described later, portions of the other end portion 10D of the ball nut 10 are denoted by the same reference numerals as those assigned to the corresponding portions of the one end portion 10C, and description thereof will be omitted. Although not illustrated in FIG. 5, the same configuration as the accommodation groove 48 (see FIGS. 9A and 9B) of the one end portion 10C of the ball nut 10 is also provided in the other end portion 10D of the ball nut 10. In the state where the second deflector 120 is fitted, the ball guide portion 28 of the second deflector 120 is disposed and accommodated in a space defined by the corresponding portions.

As illustrated in FIG. 4, the second deflector 120 is fitted into the other end portion 10D of the ball nut 10 in a state where the opening 27 of the rail portion 25 is directed toward the ball nut 10. Therefore, in a case where the second deflector 120 is described by using FIGS. 7A, 7B, and 7C, in a state where the second deflector 120 is fitted to the other end portion 10D of the ball nut 10, the axial direction X1 and the axial direction X2 in FIGS. 7A and 7B are reversed.

The second fitting member 121 has the same specifications as those of the first fitting member 21. The second deflector 120 is fitted to the other end portion 10D of the ball nut 10 by using the second fitting member 121 in the same manner as the manner in which the first deflector 20 is fitted to the one end portion 10C of the ball nut 10 by using the first fitting member 21. In FIG. 14 that will be described later, portions of the second fitting member 121 are denoted by the same reference numerals as those assigned to the corresponding portions of the first fitting member 21, and description thereof will be omitted.

In the state where the second deflector 120 is fitted to the other end portion 10D of the ball nut 10, the second end portion ball passage 151 (see FIG. 5) communicates with the inner ball passages 47 (second ball passage, see FIG. 5) via the same guide passage (not illustrated) as the guide passage 31. FIG. 13 is a sectional view taken along a line E-E in FIG. 5. FIG. 14 is a sectional view taken along a line F-F in FIG. 5.

As illustrated in FIGS. 5, 13, and 14, the balls 24 are set to form rows in the first end portion ball passage 51, the inner ball passages 47, and the second end portion ball passage 151 (the balls 24 may be collectively called "ball row BL"). Therefore, the ball row BL in the inner ball passages 47 is able to roll along the inner ball passages 47.

As illustrated in FIGS. 13 and 14, the ball screw device 11 includes the first elastic member 61 and a second elastic member 161. The first elastic member 61 is accommodated in the first deflector 20 (first end portion ball passage 51). The second elastic member 161 is accommodated in the second deflector 120 (second end portion ball passage 151). As illustrated in FIG. 13, as the first elastic member 61, a cylindrical coil spring, more preferably, a compression coil spring is employed. The first elastic member 61, which is contracted in a compressed state, is accommodated in the first end portion ball passage 51.

The base end (one end) 61B of the first elastic member 61 is locked to the locking surface 38 of the fixing portion 36 of the first fitting member 21 for fitting the first deflector 20. In this state, a distal end 61A of the first elastic member 61 is provided so as to be able to contact the ball 24 at one end BL1 of the ball row BL. The distal end 61A of the first elastic member 61 elastically presses the corresponding ball 24 when the distal end 61A contacts the corresponding ball 24. Each of the distal end 61A and the base end 61B of the first elastic member 61 may be of an open end type (non-ground end), a closed end type (tapered end), or a pigtail end type.

As illustrated in FIG. 14, as the second elastic member 161, a cylindrical coil spring, more preferably, a compression coil spring is employed. The second elastic member 161, which is contracted in a compressed state, is accommodated in the second end portion ball passage 151. A base end (one end) 161B of the second elastic member 161 is locked to the locking surface 38 of the fixing portion 36 of the second fitting member 121 for fitting the second deflector 120. In this state, a distal end (the other end) 161A of the second elastic member 161 is provided so as to be able to contact the ball 24 at the other end BL2 of the ball row BL. The distal end 161A of the second elastic member 161 elastically presses the corresponding ball 24 when the distal end 161A contacts the corresponding ball 24.

As illustrated in FIGS. 5, 13, and 14, since the number of balls 24 provided in the ball screw device 11 is large and both the ends BL1 and BL2 of the ball row BL are elastically pressed by the first and second elastic members 61, 161, the balls 24 are arranged at a high density. More specifically, in the first end portion ball passage 51, the inner ball passages 47, and the second end portion ball passage 151, the balls 24 are arranged like a string of beads, and thus almost no clearance is present between the adjacent balls 24.

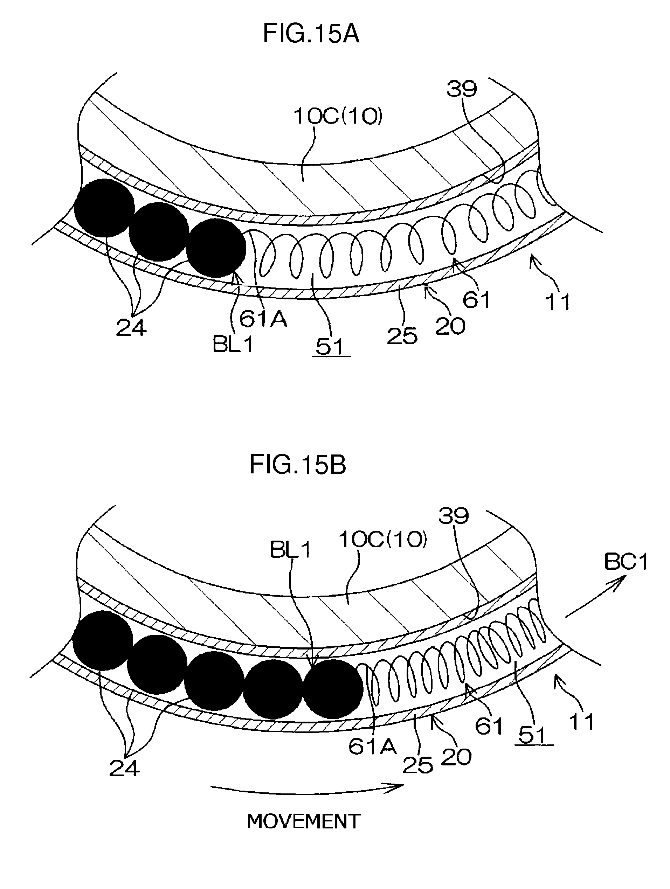

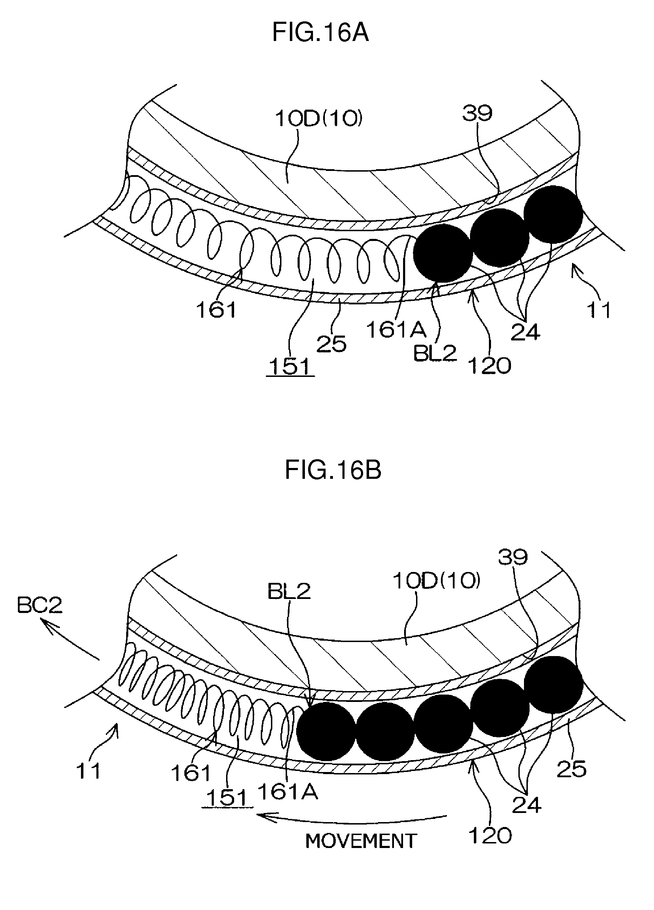

Next, an operation of the ball screw device 11 will be described. FIGS. 15A and 15B are views illustrating the behavior of the balls 24 in the first end portion ball passage 51 when an axial load directed to one side in the axial direction X (i.e., an axial load directed in the axial direction X1, see FIG. 4 and the like) is input to the ball screw device 11. FIGS. 16A and 16B are views illustrating the behavior of the balls 24 in the second end portion ball passage 151 when an axial load directed to the other side in the axial direction X (i.e., an axial load directed in the axial direction X2, see FIG. 4 and the like) is input to the ball screw device 11.

In a case where no axial load is input to the ball screw device 11, that is, in a case where no axial load is input to the screw shaft 22, sliding between the balls 24 in the inner ball passages 47 (see FIG. 5 and the like) and the screw grooves 41, 43 (see FIG. 5 and the like) occurs. Therefore, the screw shaft 22 (see FIG. 5 and the like) and the ball nut 10 rotate relative to each other with low friction, and thus a stroke (relative movement in the axial direction X) of the screw shaft 22 and the ball nut 10 can be smoothly performed.

Referring to FIGS. 4, 5, 13, 15A, and 15B, in a case where the input of the axial load directed in the axial direction X1 is input to the screw shaft 22 (see FIG. 15B), the axial load is applied to each of the balls 24 that are present in the inner ball passages 47, and since the inner ball passages 47 are helical, a force that urges each of the balls 24 to move to the first end portion ball passage 51 along the inner ball passages 47 is applied to the corresponding ball 24. From the state (see FIG. 15A) where no axial load is input to the screw shaft 22, the balls 24 in the entire ball row BL roll by an amount corresponding to a stroke toward the one end BC1 (that is, the locking surface 38 of the first fitting member 21) of the path constituted by the first end portion ball passage 51, the inner ball passages 47, and the second end portion ball passage 151. At this time, since the balls 24 roll in the inner ball passages 47 (since the balls 24 come into contact with the screw grooves 41, 43 while rolling), friction loss between the balls 24 and the screw grooves 41, 43 can be reduced. Accordingly, the stroke of the screw shaft 22 and the ball nut 10 can be smoothly performed.

In this state, the balls 24 roll in the first end portion ball passage 51 toward the one end BC1 (the locking surface 38 of the first fitting member 21) of the ball path, and press the distal end 61A of the first elastic member 61 toward the one end BC1 of the ball path. The first elastic member 61 is compressed by the pressing operation. When the inputting of the axial load to the screw shaft 22 is ended, the first elastic member 61 in the compressed state is restored, and thus the distal end 61A of the first elastic member 61 elastically presses one end BL1 of the ball row BL toward the other end BC2 (the locking surface 38 (see FIG. 14) of the second fitting member 121) of the path constituted by the first end portion ball passage 51, the inner ball passages 47, and the second end portion ball passage 151. Therefore, the balls 24 return to their original positions.

Referring to FIGS. 4, 5, 14, 16A, and 16B, in a case where the axial load toward the axial direction X2 is input to the screw shaft 22 (see FIG. 16B), the axial load is applied to each of the balls 24 that are present in the inner ball passages 47, and since the inner ball passages 47 are helical, a force that urges each of the balls 24 to move to the second end portion ball passage 151 along the inner ball passages 47 is applied to the corresponding ball 24. From the state (see FIG. 16A) where no axial load is input to the screw shaft 22, the balls 24 in the entire ball row BL roll by a stroke toward the other end BC2 (the locking surface 38 of the second fitting member 121) of the path constituted by the first end portion ball passage 51, the inner ball passages 47, and the second end portion ball passage 151. At this time, since the balls 24 roll in the inner ball passages 47 (since the balls 24 come into contact with the screw grooves 41, 43 while rolling), friction loss between the balls 24 and the screw grooves 41, 43 can be reduced. Accordingly, the stroke of the screw shaft 22 and the ball nut 10 can be smoothly performed.

In this state, the balls 24 roll in the second end portion ball passage 151 toward the other end BC2 (the locking surface 38 of the second fitting member 121) of the ball path, and press the distal end 61A of the first elastic member 61 toward the other end BC2 of the ball path. The second elastic member 161 is compressed by the pressing operation. When the inputting of the axial load to the screw shaft 22 is ended, the second elastic member 161 in the compressed state is restored, and thus the distal end 161A of the second elastic member 161 elastically presses the other end BL2 of the ball row BL toward the one end BC1 of the ball path. Therefore, the balls 24 return to their original positions.

As described above, according to this embodiment, it is possible to suppress the friction loss between the balls 24 and the screw grooves 41, 43 when the axial load is input to the screw shaft 22. As a result, the smooth stroke of the screw shaft 22 with respect to the ball nut 10 can be realized. Accordingly, it is possible to provide the non-circulation type ball screw device 11 in which power can be transmitted between the screw shaft 22 and the ball nut 10 with high efficiency.

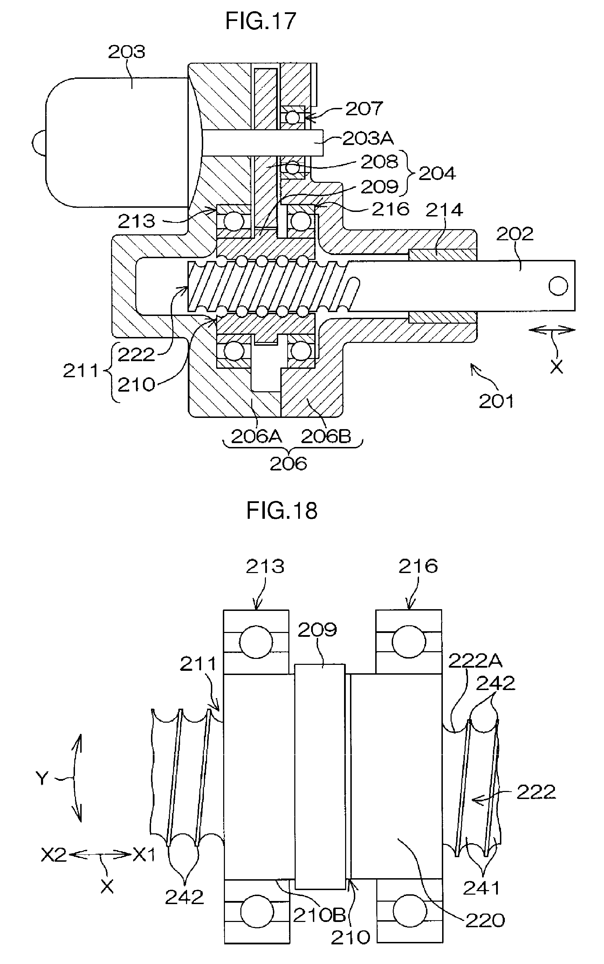

By adjusting the circumferential postures of the guide passages 31 of the first and second deflectors 20, 120, the theoretical effective number of turns of the ball screw device 11 can be employed without change. Therefore, it is possible to reduce the size of the ball screw device 11 in the axial direction X. FIG. 17 is a schematic sectional view of an electric actuator to which a ball screw device 211 according to a second embodiment of the present invention is applied. The electric actuator 201 drives a driven object by causing a drive shaft 202 to advance and retreat in the axial direction X.

The electric actuator 201 includes an electric motor 203, a drive shaft 202, a speed reducing mechanism 204, the ball screw device 211, and a housing 206. The speed reducing mechanism 204 transmits a running torque of the electric motor 203. The ball screw device 211 converts the running torque of the electric motor 203 transmitted via the speed reducing mechanism 204, to linear motion of the drive shaft 202 in the axial direction X. The housing 206 accommodates the speed reducing mechanism 204 and the ball screw device 211.

The housing 206 include a first housing 206A and a second housing 206B that contacts the end face of the first housing 206A. The first housing 206A and the second housing 206B are joined to each other by a fixing bolt (not illustrated). The electric motor 203 is fitted to the first housing 206A. An output shaft 203A of the electric motor 203 is inserted into the first housing 206A, and is rotatably supported by a rolling bearing 207 that is fitted to the second housing 206B.

The drive shaft 202 is formed to be integrated with a screw shaft 222 of the ball screw device 211. The drive shaft 202 is rotatably supported via a plain bearing 214 in the second housing 206B. The speed reducing mechanism 204 includes a first gear 208 and a second gear 209. The first gear 208 is accommodated and disposed between the first and second housings 206A, 206B. The first gear 208 is fitted to the end portion of the output shaft 203A of the electric motor 203 so as not to rotate relative to the end portion of the output shaft 203A. The second gear 209 is integrally provided to protrude toward the outside from the outer peripheral surface of a ball nut 210, and is engaged with the first gear 208.

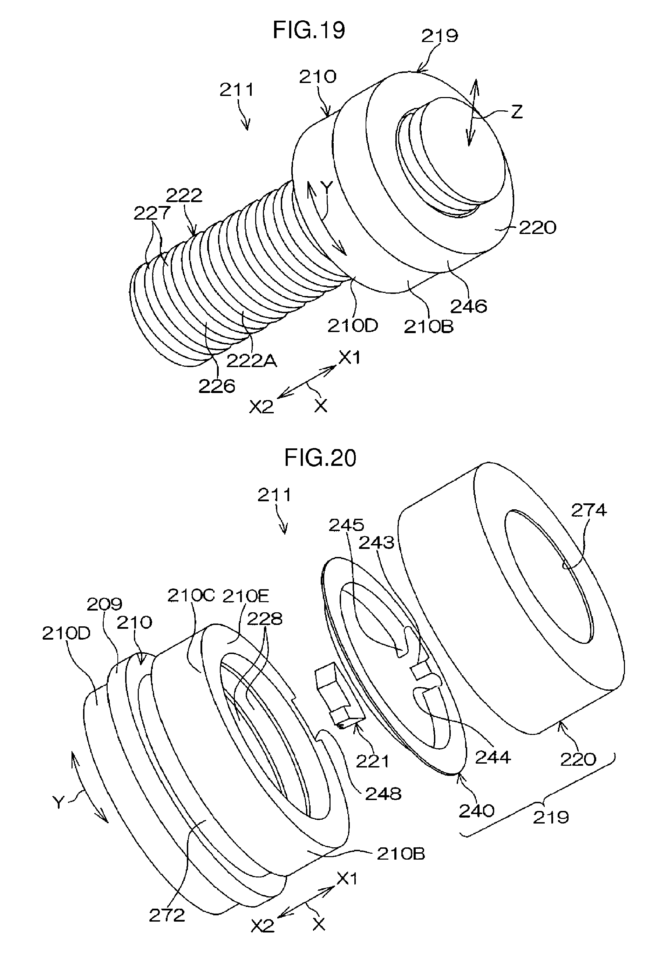

FIG. 18 is a schematic side view of the ball screw device 211 according to the second embodiment of the present invention. As illustrated in FIGS. 18 and 19, the ball nut 210 is rotatably supported by a rolling bearing 213 and a rolling bearing 216. The rolling bearing 213 is fitted to the inner periphery of the first housing 206A. The rolling bearing 216 is fitted to the inner periphery of the second housing 206B. The second gear 209, the rolling bearing 213, and the rolling bearing 216 are fitted and fixed to the outer periphery of the ball nut 210.

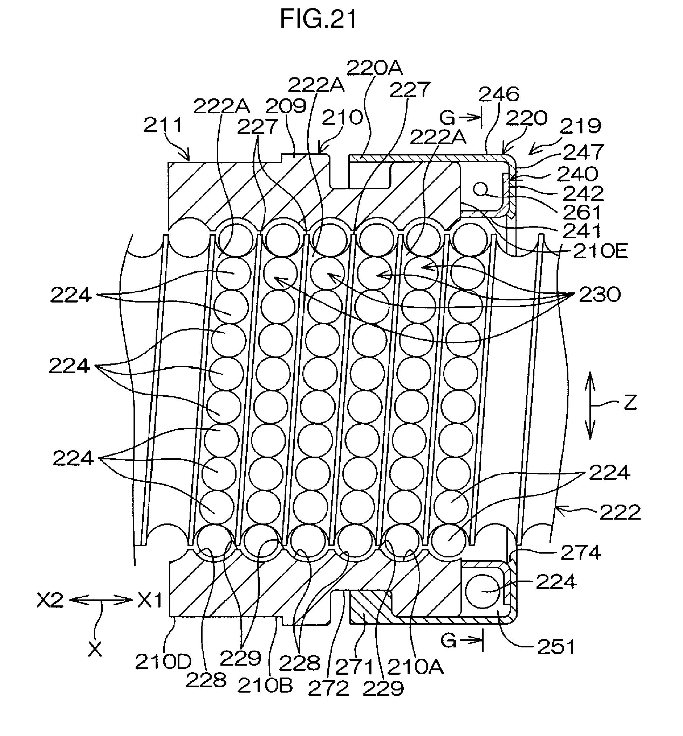

FIG. 19 is a perspective view of the ball screw device 211. FIG. 20 is an exploded perspective view of the ball screw device 211, where the illustration of a part of the screw shaft 222 is omitted. FIG. 21 is a sectional view of the ball screw device 211 taken along an axial direction X. As illustrated in FIGS. 19 to 21, the ball screw device 211 includes the screw shaft 222, the ball nut 210, an end portion constituent member 219, a plurality of balls 224 (see FIG. 21), an elastic member 261, and a contact member (restriction member) 221. The screw shaft 222 extends along the axial direction X. The ball nut 210 is externally fitted to the screw shaft 222. The end portion constituent member 219 is fitted to one end portion (end portion in the axial direction X1) 210C of the ball nut 210 in the axial direction X. The balls 224 are set in the inside of the end portion constituent member 219 and the inside of the ball nut 210, and the balls 224 form a ball row BL. The elastic member 261 is accommodated in the end portion constituent member 219. The contact member (restriction member) 221 is fitted to the end portion constituent member 219, and contacts a base end 261B of the elastic member 261. An end portion ball passage 251 is formed and defined in the end portion constituent member 219.

The ball screw device 211 is a non-circulation type ball screw device in which the balls 224 are not circulated. The number of turns of the ball screw device 211 is, for example, 4.5. In the ball screw device 211, the effective number of turns, which is theoretically required, is also 4.5, and the theoretical effective number of turns is employed without change, as the actual number of turns. Hereinafter, in this embodiment, as in the first embodiment, one axial direction (the rightward direction in FIGS. 18 and 21 and the direction toward the right front side in FIGS. 19 and 20) is referred to as the axial direction X1, and the other axial direction (the leftward direction in FIGS. 18 and 21 and the direction toward the left rear side in FIGS. 19 and 20) is referred to as an axial direction X2 in the description. The axial direction X1 and the axial direction X2 are collectively referred to as the axial direction X.

As illustrated in FIGS. 18, 19, and 21, screw grooves 226 are formed on an outer peripheral surface 222A of the screw shaft 222. The screw grooves 226 are helical grooves that are disposed at different positions in the axial direction X1 while extending in circles around the circle center of the screw shaft 222. The section of the screw groove 226 is a curved surface having a substantially U-shape. A helical screw thread 227 that forms the boundary between the adjacent screw grooves 226 in the axial direction X is formed on the outer peripheral surface 222A.

Next, the ball nut 210 will be described with reference to FIGS. 18 to 21 in detail. The ball nut 210 is a cylindrical body that extends along the axial direction X, and the ball nut 210 is formed using a metal such as steel. An inner peripheral surface 210A and an outer peripheral surface 210B of the ball nut 210 are cylindrical surfaces that have the center axis extending along the axial direction X. Screw grooves 228 are formed on the inner peripheral surface 210A of the ball nut 210. The screw grooves 228 are helical grooves that are disposed at different positions in the axial direction X1 while extending in circles around the circle center of the inner peripheral surface 210A. The section of the screw groove 228 is a curved surface having a substantially U-shape. A helical screw thread 229 (see FIG. 21) that forms the boundary between the adjacent screw grooves 228 in the axial direction X is formed on the inner peripheral surface 210A. The screw grooves 228 are formed over the entire inner peripheral surface 210A of the ball nut 210.

A clinch groove 272, which is constituted by a cylindrical groove, is formed on the intermediate portion of the outer peripheral surface 210B of the ball nut 210 so that the clinch groove 272 is adjacent to the position at which the second gear 209 is formed. As illustrated in FIG. 21, in a region of the ball nut 210 where the inner peripheral surface 210A is present, helical inner ball passages (second ball passage) 230, in which the balls 224 are able to roll, are defined by the screw grooves 228 of the ball nut 210 and the screw grooves 226 on a part of the outer peripheral surface 222A of the screw shaft 222, the part facing the inner peripheral surface 210A. As illustrated in FIG. 21, each of the inner ball passages 230 has a substantially circular section. The inner ball passages 230 are disposed at different positions in the axial direction X1 while extending in circles around the circle center of the inner peripheral surface 210A of the ball nut 210 and the outer peripheral surface 222A of the screw shaft 222, and thus, the inner ball passages 230 have a helical shape. Between the adjacent inner ball passages 230 in the axial direction X, the screw thread 227 of the screw shaft 222 and the screw thread 229 of the ball nut 210 are arranged to face each other in the radial direction. The screw threads 227, 229 form the boundary between the adjacent two rows of the inner ball passages 230 in the axial direction X. In this embodiment, in the other end portion 210D of the ball nut 210, the inner ball passages 230 are sealed by using a sealing pin and the like.

As illustrated in FIG. 20, in an end face 210E of the ball nut 210 in the axial direction X1, an accommodation groove 248, which has a rectangular shape when viewed from the outside in the radial direction Z and when viewed in the axial direction X1, is formed at a point in the circumferential direction Y. As illustrated in FIGS. 19 to 21, the end portion constituent member 219 is fitted to the end face 210E of the ball nut 210 in the axial direction X1.

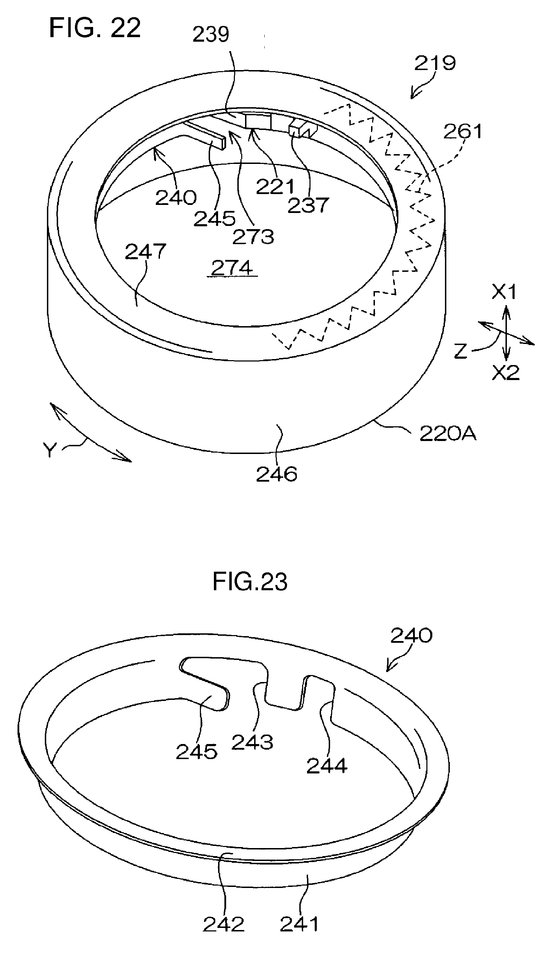

FIG. 22 is a perspective view of the end portion constituent member 219. FIG. 23 is a perspective view of an inside constituent member 240 of the end portion constituent member 219. As illustrated in FIG. 22, the end portion constituent member 219 includes an outside constituent member 220 and the inside constituent member 240. As illustrated in FIG. 23, the inside constituent member 240 is constituted by an annular rail having a substantially L-shaped section. The inside constituent member 240 includes an annular portion 242 having an annular plate shape and an inner peripheral wall portion 241 having a substantially cylindrical shape. The inner peripheral wall portion 241 extends in a direction perpendicular to the annular portion 242, from the entire region of the inner peripheral edge of the annular portion 242. The inside constituent member 240 is manufactured by press-forming using a metal material such as steel.

First and second cut portions 243, 244 are formed in parts of the inner peripheral wall portion 241 of the inside constituent member 240 in the circumferential direction Y so that the first and second cut portions 243, 244 are adjacent to each other in the circumferential direction Y. The first and second cut portions 243, 244 are formed by cutting out the entire region in the axial direction X. The width of the first cut portion 243 in the circumferential direction Y is set to be larger than the width of the second cut portion 244 in the circumferential direction Y. A ball guide piece 245 is provided at the position at which the first cut portion 243 is formed. The ball guide piece 245 is integrally formed, by inwardly bending the inner peripheral wall portion 241 that is cut by the first cut portion 243. The ball guide piece 245 greatly protrudes in a manner such that the ball guide piece 245 is inclined toward the inside in the radial direction Z, in a direction toward one side in the circumferential direction Y (toward the right front side illustrated in FIG. 23).

As illustrated in FIG. 22, the outside constituent member 220 includes a circular bottom portion 247 and an outer peripheral cylinder 246 having a cylindrical shape. The outer peripheral cylinder 246 extends in a direction perpendicular to the bottom portion 247, from the entire region of the outer peripheral edge of the bottom portion 247. The size of the outer peripheral cylinder 246 in the axial direction X is set to be larger than the size of the inner peripheral wall portion 241 in the axial direction X. A circular opening 274 is formed in the center portion of the bottom portion 247. The bottom portion 247 and the circular opening 274 are provided to be concentric with each other.

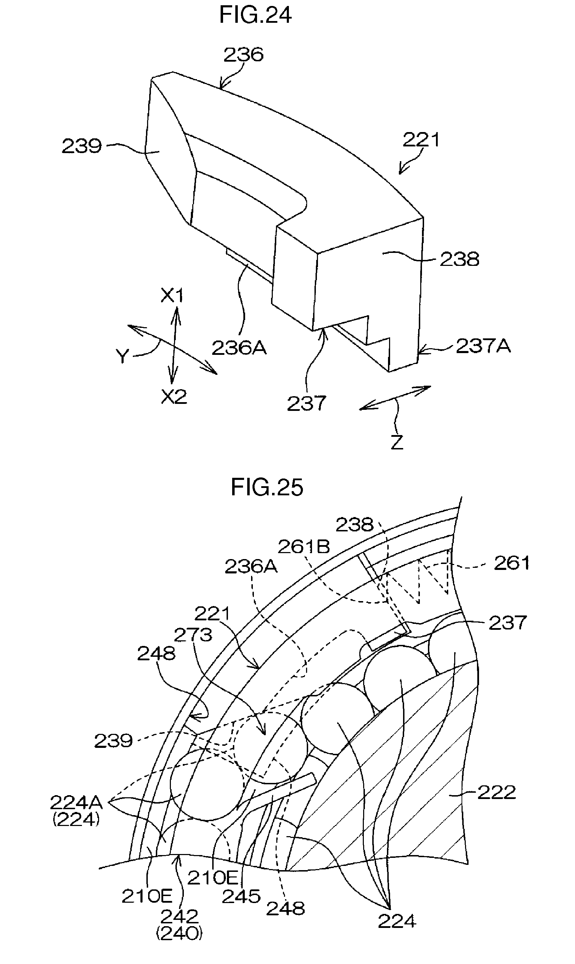

FIG. 24 is a perspective view of the contact member 221. The contact member 221 is a substantially arc-shaped member that restricts the movement of the elastic member 261 by contacting the base end 261B of the elastic member 261. The contact member 221 is a member for fixing (positioning) the inside constituent member 240 with respect to the outside constituent member 220 by being fitted to the end portion constituent member 219.

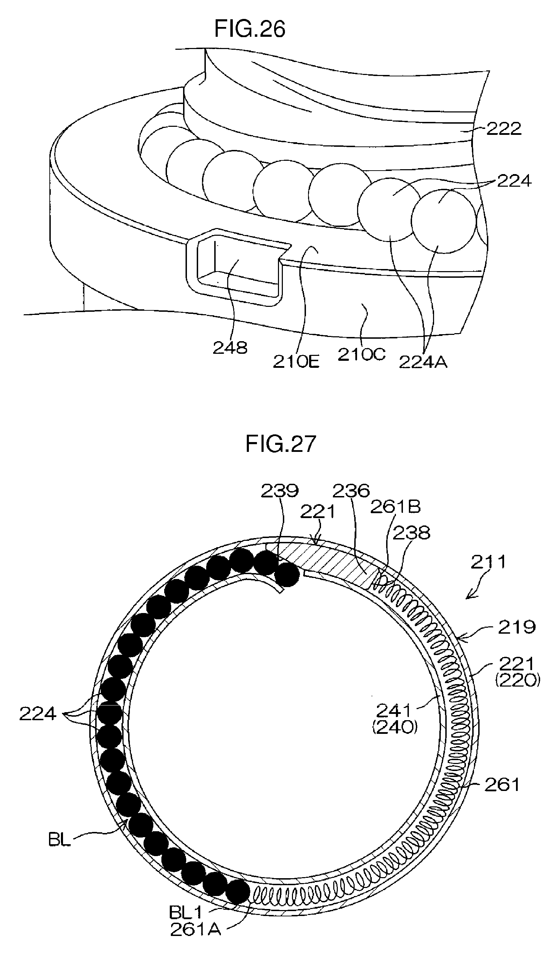

The contact member 221 is formed by using a resin material or a metal material. The contact member 221 includes a substantially arc-shaped body portion 236, a protruding portion 237, and an engaging portion 237A. The body portion 236 extends along the inner peripheral wall portion 241 of the inside constituent member 240. The protruding portion 237 protrudes toward the inside in the radial direction Z from a part (in FIG. 24, a part of the body portion 236 on one side (the right front side illustrated in FIG. 24) in the circumferential direction Y and on the axial direction X1-side) of an inner peripheral surface 236A of the body portion 236. The engaging portion 237A protrudes in the axial direction X1 from the end face of the body portion 236 on the axial direction X2-side. The shape of the section of the body portion 236 taken along a plane perpendicular to the circumferential direction Y is a rectangular shape. The thickness of the protruding portion 237 in the axial direction X is shorter than that of the body portion 236. The engaging portion 237A is formed to have a shape and a size that match the accommodation groove 248 (FIG. 26) of the end face 210E in the axial direction X and the circumferential direction Y. The engaging portion 237A is fitted into the accommodation groove 248.

In the body portion 236, in the end face on one side in the circumferential direction Y (the right front side illustrated in FIG. 24), a contact surface (restriction member) 238 that contacts the base end (one end) 261B (see FIG. 27) of the elastic member 261 is formed. The contact surface 238 is constituted by a flat surface perpendicular to the circumferential direction Y. In the body portion 236, on the inner periphery of the end portion on the other side (the left rear side illustrated in FIG. 24) in the circumferential direction Y, a ball guide surface 239 is provided. The ball guide surface 239 is a surface that is inclined toward the inside in the radial direction Z, in a direction toward one side in the circumferential direction Y (the right front side illustrated in FIG. 24).

Next, referring again to FIG. 22, the fitting of the end portion constituent member 219 and the contact member 221 to one end portion 210C of the ball nut 210 will be described. First, an operator disposes the inside constituent member 240 so that the annular portion 242 thereof faces the outside constituent member 220. Thereafter, the operator fits the inside constituent member 240 into the outside constituent member 220, and presses the inside constituent member 240 until the annular portion 242 contacts the bottom portion 247 of the outside constituent member 220. Accordingly, the end portion constituent member 219 is assembled.

Subsequently, the operator fits the contact member 221 to the inside constituent member 240 of the end portion constituent member 219. At this time, the protruding portion 237 of the contact member 221 is engaged with the second cut portion 244 so that the contact member 221 is positioned with respect to the outside constituent member 220 in the circumferential direction Y (rotation direction). In this state, the ball guide surface 239 faces the ball guide piece 245 with a predetermined clearance therebetween. A ball guide portion 273 for guiding the balls 224 between the end portion ball passage 251 and the inner ball passage 230 is formed by the ball guide piece 245 and the ball guide surface 239.

Subsequently, the operator fits the end portion constituent member 219 and the contact member 221 to the one end portion 210C of the ball nut 210. Specifically, an open end 220A of the outside constituent member 220 of the end portion constituent member 219 is externally fitted to the one end portion 210C of the ball nut 210, and the end portion constituent member 219 and the contact member 221 are sufficiently pressed with respect to the ball nut 210. At this time, the operator fits the engaging portion 237A (see FIG. 24) of the contact member 221 into the accommodation groove 248 of the end face 210E while rotating the outside constituent member 220 and the inside constituent member 240 in the circumferential direction Y. Since the engaging portion 237A and the accommodation groove 248 are fitted to each other, the outside constituent member 220 and the inside constituent member 240 are positioned with respect to the ball nut 210 in the circumferential direction Y. In the state where the end portion constituent member 219 is externally fitted to the one end portion 210C of the ball nut 210, the open end 220A of the outside constituent member 220 of the end portion constituent member 219 faces the clinch groove 272 of the outer peripheral surface 210B of the ball nut 210.

Subsequently, as illustrated in FIG. 21, the operator clinches and deforms the open end 220A of the outside constituent member 220 to form a clinch portion 271. The clinch portion 271 is engaged with the clinch groove 272. Accordingly, the end portion constituent member 219 is fixed to the ball nut 210. Thereafter, the elastic member 261 and the balls 224 are inserted from the ball guide portion 273 into the end portion ball passage 251 that will be described later. The elastic member 261 inserted into the end portion ball passage 251 is pressed against the contact member 221 by inserting the balls 224. As a result, in the end portion ball passage 251, the elastic member 261 is disposed and accommodated in the end portion ball passage 251 so that the base end 261B is able to contact the contact surface 238.

In the state where the end portion constituent member 219 is fixed to the ball nut 210, a C-shaped (substantially annular) end portion ball passage (first ball passage, non-loaded zone) 251, in which the balls 224 are able to roll, is formed in the end portion constituent member 219. Specifically, the end portion ball passage 251 is defined by the outer peripheral cylinder 246 of the outside constituent member 220, the inner peripheral wall portion 241 of the inside constituent member 240, and the one end face 210E of the ball nut 210. As illustrated in FIG. 21, the end portion ball passage 251 is disposed outside the inner ball passages 230 in the radial direction Z.

FIG. 25 is a sectional view illustrating a state of the balls 224 in the vicinity of the one end face 210E of the ball nut 210 when viewed in the axial direction X of the ball nut 210. FIG. 26 is a perspective view illustrating a state where the balls 224 are discharged from the one end face 210E of the ball nut 210. Among the balls 224 in the inner ball passages 230, balls 224A, which are to be discharged from the one end face 210E, are scooped by the ball guide portion 273 (the ball guide piece 245 and the ball guide surface 239). That is, the balls 224A, which are discharged from the inner ball passage 230, are guided to the end portion ball passage 251.

FIG. 27 is a sectional view taken along a line G-G in FIG. 21. As illustrated in FIGS. 21, 25, and 27, the balls 224 are set to form rows in the end portion ball passage 251 and the inner ball passages 230 (the balls 224 may be collectively referred to as "ball row BL"). Therefore, the ball row BL in the inner ball passages 230 is able to roll along the inner ball passages 230.

As illustrated in FIG. 27, as the elastic member 261, a cylindrical coil spring, more preferably, a compression coil spring is employed. The elastic member 261, which is contracted in a compressed state, is accommodated in the end portion ball passage 251. The base end (one end) 261B of the elastic member 261 contacts the contact surface 238 of the body portion 236 of the contact member 221. In this state, a distal end (the other end) 261A of the elastic member 261 is provided so as to be able to contact the ball 224 at one end BL1 of the ball row BL. The distal end 261A of the elastic member 261 elastically presses the corresponding ball 224 when the distal end 261A contacts the corresponding ball 224.

Each of the distal end 261A and the base end 261B of the elastic member 261 may be of an open end type (non-ground end), a closed end type (tapered end), or a pigtail end type. As illustrated in FIGS. 21 and 27, since the number of balls 224 provided in the ball screw device 211 is large and the one end BL1 of the ball row BL is elastically pressed by the elastic member 261, the balls 224 are arranged in the end portion ball passage 251 and the inner ball passages 230 at a high density. More specifically, in the end portion ball passage 251 and the inner ball passages 230, the balls 224 are arranged like a string of beads in a state where almost no clearance is present between the adjacent balls 224.

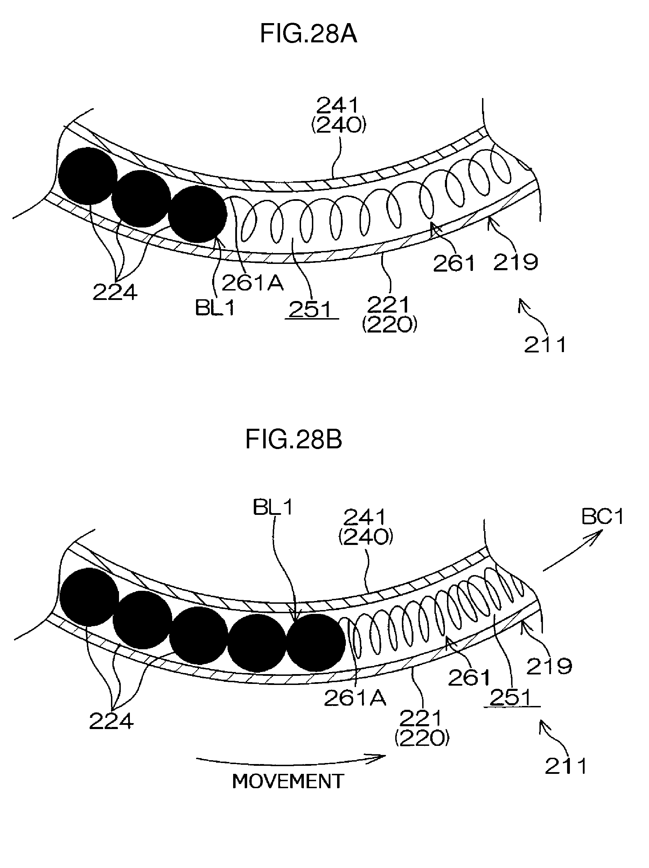

FIGS. 28A and 28B are views illustrating the behavior of the balls 224 in the end portion ball passage 251 when an axial load directed to one side in the axial direction X (an axial load directed in the axial direction X1, see FIG. 20 and the like) is input to the ball screw device 211. Referring to FIGS. 21, 27, 28A, and 28B, an operation of the ball screw device 211 will be described. In a case where no axial load is input to the ball screw device 211, or in a case where the input axial load is small, the balls 224 remain in their positions by the elastic pressing of the elastic member 261, and sliding between the balls 224 in the inner ball passages 230 and the screw grooves 226, 228 occurs (sliding screw). Therefore, the screw shaft 222 and the ball nut 210 rotate relative to each other with low friction. Accordingly, a stroke (relative movement in the axial direction X) of the screw shaft 222 and the ball nut 210 can be smoothly performed.

On the other hand, in a case where the input axial load is large, the axial load is applied to each of the balls 224 that are present in the inner ball passages 230, and since the inner ball passages 230 are helical, a force that urges each of the balls 224 to move to the end portion ball passage 251 along the inner ball passage 230 is applied to the corresponding ball 224. From the state (see FIG. 28A) where no axial load is input to the screw shaft 222, the balls 224 in the entire ball row BL roll by an amount corresponding to a stroke toward the one end BC1 (that is, the contact surface 238 of the contact member 221) of the path constituted by the end portion ball passage 251 and the inner ball passages 230. At this time, since the balls 224 roll in the inner ball passages 230 (since the balls 224 come into contact with the screw grooves 226, 228 while rolling), friction loss between the balls 224 and the screw grooves 226, 228 can be reduced. Accordingly, the stroke of the screw shaft 222 and the ball nut 210 can be smoothly performed.

In this state, the balls 224 roll in the end portion ball passage 251 toward the one end BC1 (the contact surface 238 of the contact member 221) of the ball path, and press the distal end 261A of the elastic member 261 toward the one end BC1 of the ball path. The elastic member 261 is compressed by the pressing operation. When the inputting of the axial load to the screw shaft 222 is ended, the elastic member 261 in the compressed state is restored, and thus the distal end 261A of the elastic member 261 elastically presses the one end BL1 of the ball row BL toward the other end (the end opposite to the BC1) of the path constituted by the end portion ball passage 251 and the inner ball passages 230. Therefore, the balls 224 return to their original positions.

As described above, according to this embodiment, it is possible to suppress the friction loss between the balls 224 and the screw grooves 226, 228 when the axial load is input to the screw shaft 222. As a result, the smooth stroke of the screw shaft 222 with respect to the ball nut 210 can be realized. Accordingly, it is possible to provide the non-circulation type ball screw device 211 in which power can be transmitted between the screw shaft 222 and the ball nut 210 with high efficiency.

By adjusting the posture of the end portion constituent member 219 in the circumferential direction Y, the theoretical effective number of turns of the ball screw device 211 can be employed without change. Therefore, it is possible to reduce the size of the ball screw device 211 in the axial direction X. While the two embodiments of the present invention have been described above, the present invention may be realized in other embodiments.

For example, in the first embodiment, in a case where only the axial load directed in the axial direction X1 is input and the axial load directed in the axial direction X2 is not input to the ball screw device 11, only the first deflector 20 may be fitted to the one end portion 10C of the ball nut 10. In this case, the inner ball passage 47 is sealed at the other end portion 10D of the ball nut 10. In the second embodiment, in a case where both the axial load directed in the axial direction X1 and the axial load directed in the axial direction X2 are input to the ball screw device 211, an end portion constituent member, which has the same configuration as that of the end portion constituent member 219, may be fitted to the other end portion 210D of the ball nut 210.

In this case, the same configuration as in the first embodiment is employed. For example, the balls 224 are set to form a row extending in the end portion ball passages 251 of both the end portion constituent members 219, and the inner ball passages 230. The other ends 261A of the elastic members 261 of the end portion constituent members 219 respectively contact one end and the other end of the ball row BL. In the first embodiment, it is described that the curved shapes of the first and second curved portions 32, 34 of the first and second ball guide pieces 29, 30 protrude both in the axial direction X2 and toward the inside in the radial direction Z, in the direction toward one side in the circumferential direction Y (toward the right side in FIGS. 7A, 7B and 7C). However, the shape may protrude only in the axial direction X2, or may protrude only in the radial direction Z.

In the first embodiment, it is described that the first and second ball guide pieces 29, 30 have the same specifications. However, the shapes, the sizes, and the like of the first and second ball guide pieces 29, 30 may be different from each other. In the first embodiment, it is described that the base ends 61B, 161B of the first and second elastic members 61, 161 are locked to the locking surfaces 38 of the first and second fitting members 21, 121. However, the base ends 61B, 161B of the elastic members 61, 161 may not be locked to the fitting members 21, 121, and the base ends 61B, 161B may be provided so as to be able to contact the locking surfaces 38.

In the second embodiment, it is described that the base end 261B of the elastic member 261 is provided so as to be able to contact the contact surface 238. However, the base end 261B may be locked to the contact surface 238. In the second embodiment, it is described that the ball guide piece 245 and the ball guide surface 239 protrude toward the inside in the radial direction Z, in the direction toward one side in the circumferential direction Y (toward the right front side illustrated in FIGS. 23 and 24). However, the ball guide piece 245 and the ball guide surface 239 may protrude both in the axial direction X1 and toward the inside in the radial direction Z, in the direction toward one side in the circumferential direction Y (toward the right front side illustrated in FIGS. 23 and 24).

Furthermore, in the first embodiment, the case where the ball guide portion 28 including the first and second ball guide pieces 29, 30 is provided in each of the first and second deflectors 20, 120 is exemplified. However, the same configuration as the ball guide portion 28 may be provided by machining the inner peripheral surface 10A of the ball nut 10, or the same configuration as the ball guide portion 28 may be provided by using a member other than the ball nut 10 and the deflectors 20, 120.

Furthermore, various modifications in design can be made without departing from the scope defined by the appended claims.

## Claims

1. A ball screw device comprising:
a screw shaft having an outer peripheral surface on which a screw groove is formed;
a ball nut that is externally fitted to the screw shaft, the ball nut having an inner peripheral surface on which a screw groove is formed;
an end portion constituent member that is fitted to at least one of end portions of the ball nut in an axial direction and has an annular first ball passage in which a plurality of balls is able to move;
a ball guide portion that guides the balls positioned in a helical second ball passage formed by the screw grooves of the ball nut and the screw shaft or the balls discharged from the second ball passage, to the first ball passage;
the balls that are set to form a row extending in the first and second ball passages; and
an elastic member that is configured to be elastically deformable, the elastic member having one end that is positioned in the first ball passage and the other end that is disposed and accommodated in the first ball passage so as to be able to contact the ball positioned at an end of the row of the balls.

2. The ball screw device according to claim 1, wherein the ball guide portion is provided in the end portion constituent member, and includes a ball guide piece that guides the balls positioned in the second ball passage or the balls discharged from the second ball passage, to the first ball passage.

3. The ball screw device according to claim 2, wherein an accommodation groove for accommodating the ball guide piece is formed on the inner peripheral surface of the ball nut.

4. The ball screw device according to claim 2, further comprising
a restriction member having a restriction surface that restricts the one end of the elastic member, the restriction member being fitted to the end portion constituent member.

5. The ball screw device according to claim 4, wherein:
the restriction member includes an engaging portion that is engaged with the end portion of the ball nut; and
the end portion constituent member is fitted to the end portion by engaging the engaging portion with the end portion of the ball nut.

6. The ball screw device according to claim 5, wherein the restriction member includes a ball guide surface that guides the balls positioned in the second ball passage or the balls discharged from the second ball passage, to the first ball passage.

7. The ball screw device according to claim 2, wherein:
the first ball passage is disposed at a position different from a position of the second ball passage in the axial direction;
the first ball passage communicates with the second ball passage; and
the ball guide portion includes a curved portion that is curved to protrude in the axial direction.

8. The ball screw device according to claim 2, wherein:
the first ball passage is disposed at a position different from a position of the second ball passage in a radial direction;
the first ball passage communicates with the second ball passage; and
the ball guide portion includes a curved portion that is curved to protrude toward an outside in the radial direction.

9. The ball screw device according to claim 1, wherein the end portion constituent member includes an outside constituent member that defines an outer peripheral side of the first ball passage, and an inside constituent member that defines an inner peripheral side of the first ball passage.

10. The ball screw device according to claim 1, wherein:
the end portion constituent member includes a first end portion constituent member fitted to one end portion of the ball nut in the axial direction and a second end portion constituent member fitted to the other end portion of the ball nut in the axial direction;
the balls are set to form the row extending in the first ball passage of the first end portion constituent member, the second ball passage, and the first ball passage of the second end portion constituent member; and
the elastic member includes a first elastic member and a second elastic member, the first elastic member being configured to be elastically deformable and having one end that is positioned in the first ball passage of the first end portion constituent member and the other end that is disposed and accommodated in the first ball passage of the first end portion constituent member so as to be able to contact the ball positioned at one end of the row of the balls, and the second elastic member being configured to be elastically deformable and having one end that is positioned in the first ball passage of the second end portion constituent member and the other end that is disposed and accommodated in the first ball passage of the second end portion constituent member so as to be able to contact the ball positioned at the other end of the row of the balls.
